# EUROPEAN PATENT APPLICATION

(11) **EP 2 228 719 A1**
(43) Date of publication of application: **15.09.2010**
(21) Application number: 09003547.8
(22) Date of filing: 11.03.2009
(51) Int. Cl.: G06F 9/455, G06F 9/50

(54) **Method of executing a virtual machine, computing system and computer program**

(71) Applicant: Zimory GmbH, 10243 Berlin (DE)
(72) Inventor: Ahrens, Maximilian, 10405 Berlin (DE); Freese, Behrend, 14532 Kleinmachnow (DE)
(74) Representative: Bertsch, Florian Oliver

(57) **Abstract**

A method of executing a virtual machine, a computing system and a computer program are provided. In a method of executing a virtual machine, a first computing resource (30) receives a request to execute a virtual machine. A computing system (41) of the first computing resource (30) determines if the virtual machine is to be executed by a second computing resource (53) coupled to the first computing resource (30) via a WAN (52). The computing system (41) may determine if a base image (58; 92) of data (47) associated with the virtual machine is already stored at the second computing resource (53), may initiate execution of the virtual machine by the second computing resource (53) and my provide information on the execution to a virtual machine monitoring system (36).

## Description

The present invention relates to a method of executing a virtual machine, a computing system and a computer program. The present invention relates in particular to a method, a computing system and a computer program that allow a virtual machine to be relocated through a wide area network.

### Related Art

Data centers provide the computational power, storage and applications that most enterprises and internet-based businesses need to serve their users and customers nowadays. Traditional data centers tend to run a single operating system instance and a single business application on one physical server. This "one server, one appliance" model may lead to poor resource utilization. For illustration, on average, 80% of the data centers resources may be unused, yet electricity is still being consumed for computing and cooling. Wasted resources include CPU, RAM, storage capacity and network bandwidth. In addition to the overhead costs associated with resources which are only utilized when peak demands occur, under-utilized server resources also waste computing and cooling power. When the resources provided in a data center are dimensioned such that most of the resources are utilized on average, the resources may not be sufficient to deal with peak resource demands. Over-utilization of servers during peak demands can cause an interruption or degradation of service levels.

Virtualization is considered to provide a solution to some of the infrastructure management challenges that data centers face. It is a method of partitioning physical servers into multiple so called virtual machines (VM) acting like independent dedicated servers running their own operating system. With one physical server hosting various virtual servers, virtualization may allow more efficient sharing of CPU, RAM and storage to increase utilization of the physical server's capacity.

Cloud computing is another strategy to address the problems of appropriate resources in data centers. In cloud computing, applications and data are stored in a pool of resources distributed over many physical systems. The cloud is an abstract infrastructure in which the vendor decouples software from hardware. However, as different approaches to cloud computing exist, which may be based, for example, on a proprietary operating system, software programmers need to develop and customize their applications for a specific cloud computing environment.

Other conventional approaches to optimize resource utilization have been based on dedicated integration solutions or have required a dedicated user action. For example, when a peak demand occurs in one data center, the application may be copied, by a dedicated user action, to another data center, where it may be started. However, a user may need to become active in such a process, and the new data center may not be optimum as regards the user's requirements for quality of service, security or costs.

### Summary

Therefore, there is a need in the art for a method of executing a virtual machine, a computing system and a computer program that address some of the above problems. In particular, there is a need in the art for a method of executing a virtual machine, a computing system and a computer program that reduce the resource overhead that needs to be provided for peak demands while allowing additional resources to be integrated into a computing resource when peak demands occur.

According to aspects of the invention, this need is addressed by a method, a computing system and a computer-executable instruction code as defined in the independent claims. The dependent claims define preferred or advantageous embodiments.

According to one aspect of the present invention, a method of executing a virtual machine is provided. In the method, a request for execution of a virtual machine is received at a first computing resource. The first computing resource comprises a storage device which stores data associated with the virtual machine, a computing system configured to execute the virtual machine and a virtual machine monitoring system coupled to the computing system to monitor execution of the virtual machine. The virtual machine monitoring system requests the computing system to execute the virtual machine. The computing system determines whether the virtual machine is to be executed locally, i.e., at the first computing resource, or by a second computing resource connected to the first computing resource through a wide area network (WAN). If it is determined that the virtual machine is to be executed by the second computing resource, the computing system determines if a base image of the data associated with the virtual machine is stored at the second computing resource, initiates execution of the virtual machine at the second computing resource and provides information on the execution of the virtual machine to the virtual machine monitoring system.

In the method according to this aspect, the second computing resource that is external to the first computing resource and coupled thereto through the WAN may be logically integrated into the infrastructure of the first computing resource by allowing the virtual machine to be executed by the second computing resource, so that additional server resources can be insourced when peak demands occur. As the computing system of the first computing resource determines whether the virtual machine is to be executed locally or externally at the second resource, external resources may be utilized without requiring a dedicated user action in order to deploy the virtual machine to the external resource. As the computing system of the first computing resource provides information on the progress of the execution to the virtual machine monitoring system, the method can be integrated into data centers that employ conventional virtual machine monitoring systems. In particular, the virtual machine can be executed remotely at the second computing resource, while the monitoring of the execution of the virtual machine can be performed at the first computing resource in a conventional manner.

In an embodiment, the first computing resource may be a data center, the computing system may be a server or a set of servers installed in the data center, and the virtual machine monitoring system may be a hypervisor. The second computing resource may be another data center or a server connected to the WAN. The data associated with the virtual machine may include one or several disk image files. The data associated with the virtual machine may further include a configuration file.

In an embodiment, if the computing system determines that the virtual machine is to be executed by the second computing resource, the computing system may initiate transmission of a data portion of the data associated with the virtual machine from the first computing resource through the WAN to the second computing resource. The data portion may be selected such that it corresponds to a portion of a disk image which has not been copied to the second computing resource in the base image, or which has been modified at the first computing resource after copying the base image to the second computing resource. In this manner, the second computing center may be provided with a copy of the current disk image when the computing system of the first computing resource requests the second computing resource to execute the virtual machine.

In an embodiment, the data portion and the base image may be combined at the second computing resource, in particular using copy-on-write techniques. In an embodiment, the data portion may be a redo log which indicates changes to the disk image as compared to the base image that has previously been transmitted to the second computing resource. Thereby, in order to provide the disk image at the second computing resource, only the data portion, e.g., the redo log, has to be transmitted. The data portion may have a size that is small compared to the size of the base image.

In an embodiment, the second computing resource may start the execution of the virtual machine before the transmission of the data portion is complete. When required during execution of the virtual machine and before the transmission of the data portion is completed, data stored at the first computing resource may be remotely accessed by the second computing resource. This allows the second computing resource to start execution of the virtual machine without waiting for the transmission of the data portion to be complete.

In an embodiment, the base image may be transmitted to a plurality of computing resources connected to the first computing resource through the WAN before the request to execute the virtual machine is received at the first computing resource. The computing system may select the second computing resource from the plurality of computing resources. This allows the time required to provide the second computing resource with the disk image to be reduced.

In an embodiment, the computing system may select the second computing resource according to criteria set by a user. Additionally or alternatively, the computing system may select the second computing resource based on availability information for the plurality of computing resources, which can be retrieved through the WAN. Criteria set by a user may, for example, include security settings, quality of service requirements, such as required execution speeds or data rates supported by the second computing resource, and similar. The information on availability for the plurality of computing resources may, for example, include information on a current status and information on a time span over which a given capacity can be guaranteed. The computing system of the first computing resource may determine a second computing resource which provides an acceptable service level in view of the quality and security criteria set by the user and provides sufficient resources for executing the virtual machine.

In an embodiment, the computing system may monitor network parameters, such as a data transmission rate, a latency, fluctuations in data transmission rate or fluctuations in latency, respectively for data transmission between the first computing resource and each one of a plurality of computing resources. The second computing resource may be selected from the plurality of computing resources based on target network parameters associated with the virtual machine.

In an embodiment, if a plurality of virtual machines is to be executed remotely, the second computing resource on which the virtual machine is to be executed may be selected from the plurality of computing resources based on target network parameters associated with the virtual machine, target network parameters associated with at least one other virtual machine, and the network parameters measured for the plurality of computing resources.

In an embodiment, the computing system may monitor network parameters, such as a data transmission rate and/or a latency, for data transmission between the first computing resource and the second computing resource. The computing system may dynamically shape a data traffic based on the monitored network parameters and/or may provide information on the monitored data transmission rate, latency etc. to other applications executed at the first computing resource, such as the virtual machine monitoring system. In this manner, time delays incurred by the external execution of the virtual machine at the second computing resource, as compared to a local execution at the first computing resource, may be accounted for.

In an embodiment, the computing system may initiate execution of more than one virtual machine by one or several second computing resources connected to the first computing resource through the WAN. Then, the computing system may monitor network parameters, such as the data transmission rates and/or latencies, for data transmission between the first computing resource and the various second computing resources on which virtual machines are externally executed. The computing system of the first computing resource may perform a local dynamical traffic shaping to optimize data traffic for the various virtual machines that are executed externally. The traffic shaping may include adjusting the priorities of data to be transmitted or received for the various virtual machines. Thereby, a sufficient bandwidth may be guaranteed for every virtual machine that is executed externally.

In an embodiment, the computing system may simulate, toward the virtual machine monitoring system, a local execution of the virtual machine to provide the information on the execution to the virtual machine monitoring system. As used herein, terms such as "simulation" of the virtual machine by the computing system refer to a behaviour in which the computing system reacts to requests from the virtual machine monitoring system in essentially the same way as it would if the virtual machine were executed by the computing system, i.e., locally at the first computing resource. However, the term "simulation" of the virtual machine does not preclude that the computing system may also provide information which is indicative of the fact that the virtual machine is executed remotely by the second computing resource.

In order to simulate the local execution of the virtual machine, the computing system may receive relevant status information from the second computing resource by a push mechanism. Based on the received status information, the computing system may generate status data which indicate, or simulate, a current status of the virtual machine. When the virtual machine monitoring system requests status information on the virtual machine, the computing system may generate a response based on the status information previously received from the second computing resource.

In an embodiment, a portion of the base image stored at the second computing resource, which has been modified during the execution of the virtual machine at the second computing resource, may be copied back from the second computing resource to the first computing resource when the execution of the virtual machine at the second computing resource is completed. Thereby, the data associated with the virtual machine and stored at the first computing resource may be updated. Copy-on-write techniques may be used. For illustration, the second computing resource may leave the base image file unchanged and may write data to a redo log file, which may be transmitted to the first computing resource when the execution of the virtual machine is completed.

According to another aspect of the present invention, a computing system is provided. The computing system comprises a processor, a first interface coupled to the processor, and a second interface coupled to the processor. The second interface is configured to output data to a Wide Area Network (WAN). The computing system is configured such that, when a request for execution of a virtual machine is received at the first interface, the processor determines whether the virtual machine is to be executed by the computing system or by a second computing resource connected to the computing system through the WAN. If the processor determines that the virtual machine is to be executed by the second computing resource, the processor determines if a base image of data associated with the virtual machine is stored at the second computing resource, outputs via the second interface a signal to initiate execution of the virtual machine at the second computing resource and provides information on the execution via the first interface.

In the computing system according to this aspect, the virtual machine may be executed by a second computing resource coupled to the computing system through the WAN, which allows server resources to be insourced to accommodate peak demands. As the computing system determines whether the virtual machine is to be executed locally or externally at the second resource, external resources may be automatically utilized. As the computing system provides information on the execution of the virtual machine via the first interface, which may be coupled to a virtual machine monitoring system, the computing system can be used in existing data center infrastructures and may be interfaced with known hypervisors.

In an embodiment, the computing system may be a server installed in a data center. The second computing resource may be another data center or a server connected to the WAN. The data associated with the virtual machine may include one or several disk image files.

The computing system may be configured to act as the computing system in the method of executing a virtual machine according to any one of the aspects or embodiments described herein.

In an embodiment, if the computing system determines that the virtual machine is to be executed by the second computing resource, the computing system may initiate transmission of a data portion of the data associated with the virtual machine from the first computing resource through the WAN to the second computing resource.

In an embodiment, the computing system may be configured such that the base image may be transmitted to a plurality of computing resources connected to the first computing resource through the WAN before receiving the request to execute the virtual machine. The computing system may select the second computing resource from the plurality of computing resources.

In an embodiment, the computing system may select the second computing resource from the plurality of computing resources according to criteria set by a user. Additionally or alternatively, the computing system may retrieve availability information on the availability of the plurality of computing resources and may select the second computing resource based on availability information for the plurality of computing resources, which can be retrieved through the WAN. Criteria set by a user may, for example, include security settings, quality of service requirements, and similar. The information on availability may, for example, include information on a current available capacity and a time span over which a given capacity can be guaranteed. The computing system may automatically select a second computing resource which provides an acceptable service level in view of the quality and security requirements set by the user, and which has a sufficient resource availability for executing the virtual machine.

In an embodiment, the computing system may monitor network parameters, such as a data transmission rate and/or a latency, for data transmission between the computing system and the second computing resource. The computing system may dynamically shape a data traffic based on the monitored network parameters. Additionally or alternatively, the computing system may be configured to provide information on the monitored network parameters at the first interface, or to provide the information on the monitored network parameters, e.g., the monitored data transmission rate, to other applications executed at the first computing resource.

In an embodiment, the computing system may initiate execution of more than one virtual machine by one or several second computing resources connected to the computing system via the WAN. Then, the computing system may monitor the network parameters, such as the data transmission rates and/or latencies, for data transmission between the computing system and the various second computing resources. The computing system may perform a dynamical traffic shaping to optimize data traffic for the various virtual machines that are executed externally.

In an embodiment, the computing system may simulate, toward the virtual machine monitoring system, a local execution of the virtual machine to provide the information on the execution to the virtual machine monitoring system. The computing system may be configured such that, when a request for status information is received at the first interface, the computing system reacts to the request in an essentially similar way as if the virtual machine were executed locally by the computing system.

In order to simulate the local execution of the virtual machine, the computing system may receive relevant status information from the second computing resource at the second interface. When the virtual machine monitoring system requests status information on the virtual machine, the computing system may generate a response based on the status information previously received from the second computing resource at the second interface.

In an embodiment, the computing system may be configured such that it receives data from the second computing resource at the second interface when execution of the virtual machine by the second computing resource has been completed and combines the received data with the disk image file(s) stored at the first computing resource, in order to update the disk image file(s). The computing system may be configured to employ copy-on-write techniques to combine the received data with the data associated with the virtual machine.

According to another aspect of the present invention, a computer-executable instruction code is provided. When the computer-executable instruction code is executed by a processor of a computing system, which has a first interface coupled to the processor and a second interface coupled to the processor, the second interface being configured to output data to a Wide Area Network (WAN), the instruction code directs the computing system to determine, when a request for execution of a virtual machine is received at the first interface, whether the virtual machine is to be executed by a second computing resource connected to the computing system through the WAN. The instruction code further directs the computing system, if it is determined that the virtual machine is to be executed by the second computing resource, to determine if a base image of data associated with the virtual machine is stored at the second computing resource, to output a signal via the second interface to initiate execution of the virtual machine at the second computing resource and to provide information on the execution via the first interface.

With the computer-executable instruction code of this aspect, a computing system, such as a server provided in a data center, can be configured such that a virtual machine may be executed by a second computing resource coupled to the computing system through the WAN, so that server resources may be insourced to accommodate peak demands. As the computer-executable instruction code configures the computing system to determine whether the virtual machine is to be executed locally or externally at the second resource, external resources may be automatically utilized. As the computer-executable instruction code configures the computing system to provide information on the execution via the first interface, which may be coupled to a virtual machine monitoring system, the computer-executable instruction code can be executed by servers in existing data center infrastructures, which use a conventional hypervisor.

In an embodiment, the computer-executable instruction code may comprise instructions which direct the computing system to initiate transmission of the base image to a plurality of computing resources before receiving the request at the first interface, and to select the second computing resource from the plurality of computing resources.

In an embodiment, the computer-executable instruction code may comprise instructions which direct the computing system to act as the computing system in the method of executing a virtual machine according to any one of the aspects or embodiments described herein.

The computer-executable instruction code according to any one aspect or embodiment of the invention may be embodied in a data storage device having stored thereon the computer-executable instruction code.

According to another aspect of the invention, a method of relocating virtual machines is provided. The method comprises the steps of:
providing a plurality of computing resources coupled to a wide area network (WAN);
providing a marketplace server coupled to the WAN and configured to store information on an availability and/or status of said plurality of computing resources;
accessing, when a request for execution of a virtual machine is received at a first computing resource of the plurality of computing resources, the marketplace server to identify a second computing resource that is available for execution of the virtual machine; and
relocating the virtual machine from the first computing resource to the second computing resource through the WAN for execution of the virtual machine at the second computing resource.

In an embodiment, a computing resource of the plurality of computing resources may offer free capacities at the marketplace server.

In an embodiment, the marketplace server is configured to act as a trading hub for outsourcing or insourcing server resources.

In an embodiment, the virtual machine can be relocated such that an execution process is monitored at the first computing resource.

In an embodiment, the virtual machine is relocated such that the remote execution of the virtual machine at the second computing resource can be seamlessly integrated into the virtualization infrastructure provided at the first computing resource.

The methods and apparatuses according to the various aspects and embodiments of the invention may be utilized in all fields of application in which a computing resource may be requested to execute a virtual machine, with non-local execution being permitted to accommodate peak demands. Exemplary fields of application include data centers that are requested to execute a virtual machine.

### Brief Description of the Drawings

The invention will be described in more detail with reference to the accompanying drawing.

Fig. 1 is a schematic diagram of a network in which embodiments of the invention can be implemented.

Fig. 2 is a schematic diagram of a network in which embodiments of the invention can be implemented.

Fig. 3 is a flow diagram representation of a method according to an embodiment.

Fig. 4 is a schematic block diagram representation of a computing resource including a computing system according to an embodiment.

Fig. 5 is a schematic representation of a signal flow in a method of executing a virtual machine according to an embodiment.

Fig. 6 is a flow diagram representation of a method of executing a virtual machine according to an embodiment.

Fig. 7 is a schematic representation of disk image data stored at various computing resources in an embodiment.

Fig. 8 is a flow diagram representation of a process that may be utilized in a method of executing a virtual machine according to an embodiment.

### Detailed Description of Preferred Embodiments

Hereinafter, exemplary embodiments of the invention will be described with reference to the drawings. It is to be understood that the present invention is not limited to the specific embodiments described herein. Unless explicitly stated otherwise, features of the various embodiments may be combined with each other.

According to embodiments of the invention, methods of executing a virtual machine, computing systems and a computer-executable instruction code are provided which allow a virtual machine to be executed by a remote computing resource. As used herein, the term "virtual machine" refers to any software executed on a computing system to emulate a computer. The term "virtual machine" as used herein includes system virtual machines, also referred to as hardware virtual machines, and process virtual machines, also referred to as application virtual machines.

According to embodiments of the invention, a computing system installed in one computing resource may be operable to relocate a virtual machine for execution to another, remote computing resource coupled to the computing resource via a wide area network (WAN). As used herein, terms such as "relocate a virtual machine", "relocation of a virtual machine", "migrate a virtual machine" etc. are intended to relate to a process in which data associated with the virtual machine are provided to another computing resource, without precluding that a copy of the data may still be kept at the original computing resource.

The computing system may emulate a virtual host that initiates the execution of the virtual machine at the remote computing resource and provides information on the status of the virtual machine to a virtual machine monitoring system of the computing resource. In an embodiment, the computing system may be configured to simulate the local execution of the virtual machine in order to provide status information to the virtual machine monitoring system. As used herein, the term "virtual machine monitoring system" relates to any software or hardware configured to monitor the execution of one or several virtual machines and in particular includes a virtual machine monitor, also referred to as hypervisor. As will be explained in more detail with reference to the drawings, in an embodiment the virtual host may be configured to perform a management of disk image data associated with the virtual machine that allows the virtual machine to be executed externally without incurring significant delays.

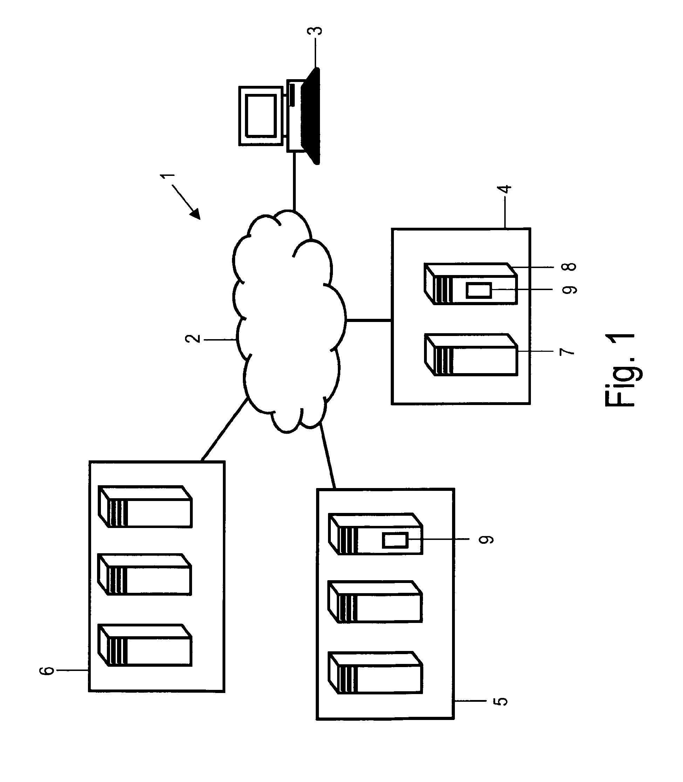

With reference to Figs. 1-3, a context will be described in which the methods, computing systems and computer programs according to various embodiments may be utilized.

Fig. 1 is a schematic diagram of a network 1. The network 1 comprises a wide area network (WAN) 2, to which a user's computer 3 and plural computing resources 4-6 are coupled. Each one of the computing resources includes one or several computing systems, such as the computing systems 7, 8 of computing resource 4. In an exemplary implementation, the WAN 2 may be the world wide web (WWW). The computing resources 4-6 may be data centers that employ virtualization, servers that employ virtualization, cloud computing infrastructures, or similar. The computing systems 7, 8 may be implemented as physical hosts installed in a data center. While some embodiments of the invention will be described in the context of computing resources configured as data centers, it is to be understood that embodiments of the invention may also utilize other implementations of computing resources.

In the network 1, a user 3 may request one of the computing resources connected to the WAN, such as computing resource 4, to execute a virtual machine 9. Examples for cases in which a user 3 may request a computing resource to execute a virtual machine include the operation of online businesses or other commercial services, the operation of news web sites and similar. The computing resource 4 may be provided with a hardware configuration that is sufficient to accommodate average resource demands so that the virtual machine 9 can be executed at the computing resource 4. However, situations may occur in which the computing resource 4 may not have available a sufficient amount of free resources to accommodate a user's request. Such situations may occur, for example, due to statistical fluctuations in the number of users requesting services from the computing resource 4, or due to a fluctuation in user demand with time, such as peak demands for online shops that occur before the holiday season. In such a case, and when the user agrees, the virtual machine may be relocated to another computing resource 5 connected to the computing resource 4 through the WAN 2, which has free resources to accommodate the user's request to execute the virtual machine and meets other criteria. As used herein, the term "resources" may include any one or any combination of a CPU capacity, a RAM capacity, a storage capacity, an available bandwidth for data transfer to and from the WAN etc.

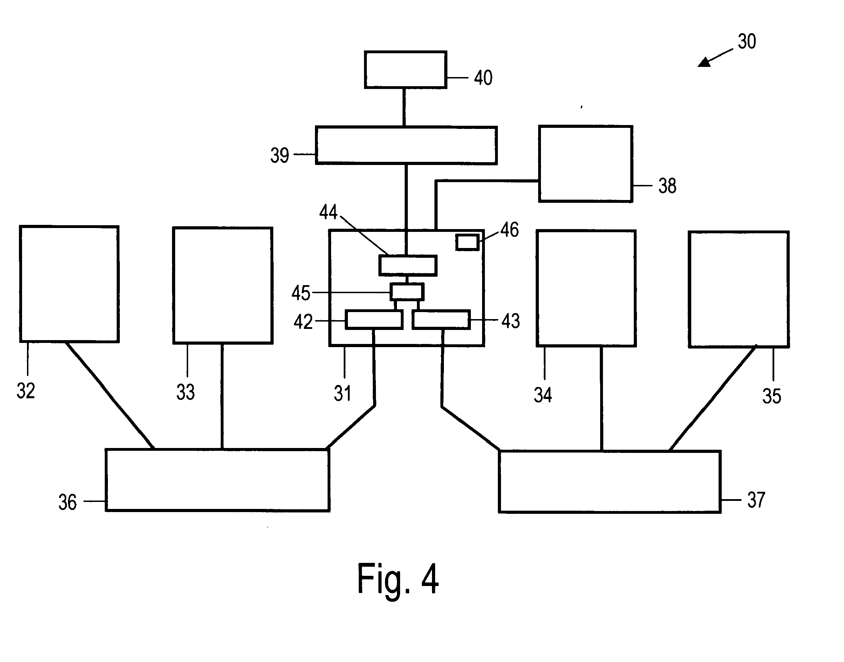

As will be explained in more detail with reference to Figs. 4-8 below, in an embodiment at least one computing system installed in the computing resource 4 of the network infrastructure may be configured so as to allow the virtual machine 9 to be executed by another computing resource 5, 6, while the status of the virtual machine can be monitored by an existing virtual machine monitoring system in the computing resource 4. I.e., according to embodiments, a virtual machine can be relocated for execution from a first computing resource to a second computing resource, while the monitoring of the execution of the virtual machine can be performed at the first computing resource.

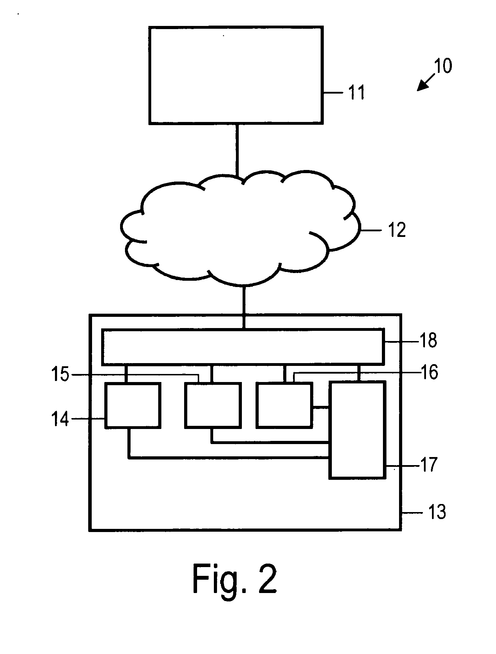

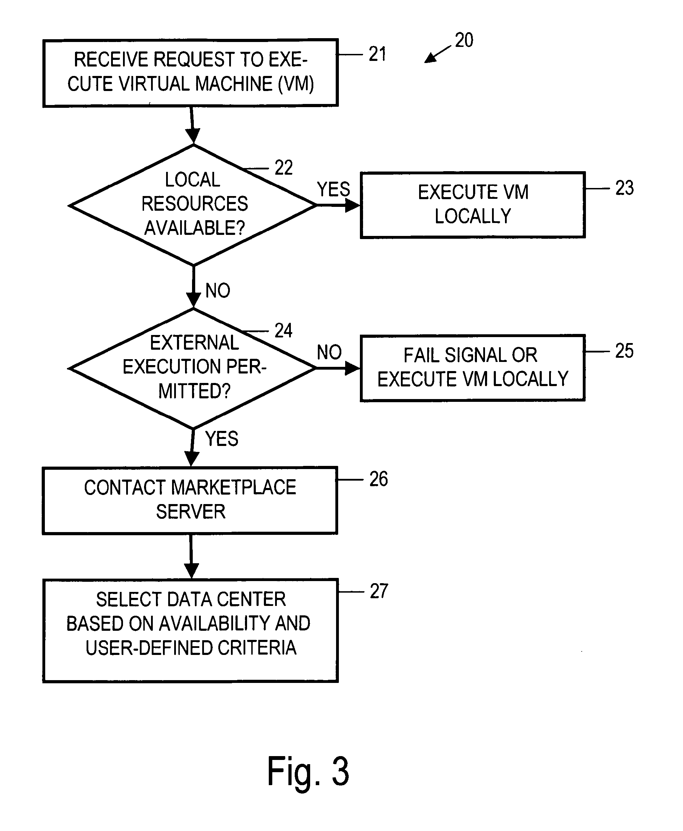

In order to allow a computing system of the computing resource 4 to select another computing resource on which the virtual machine may be executed, a marketplace server may be provided which collects information on available resources from plural computing resources connected to a WAN, as will be explained in more detail with reference to Figs. 2 and 3.

Fig. 2 is a schematic diagram of a network 10 including a marketplace server 11 connected to a WAN 12. A computing resource, for example a data center 13, is connected to the WAN 12. Additional computing resources, such as additional data centers, servers etc. (not shown in Fig. 2) are also connected to the WAN.

The marketplace server 11 is a trading hub that collects information about available server resources and their status. For illustration, data centers may provide information on an availability or a status of resources to the marketplace server 11, which stores this information. The marketplace server 11 may be configured to repeatedly retrieve information on the availability and status of resources, so as to update the availability and status information.

The data center 13 has a plurality of computing systems, such as physical hosts 14-16 configured to initiate execution of a virtual machine by another data center when a virtual machine cannot be executed by the data center 13. Vice versa, the physical hosts 14-16 may also be configured to provide information on an availability or status of resources to the marketplace server 11, and to execute a virtual machine relocated to the data center 13 for execution from another data center.

The data center 13 further comprises a firewall 18 and a management system 17 respectively coupled to the hosts 14-16. The management system 17 may be used to control the deployment of virtual machines to other data centers, or may allow a data center operator to suspend or manually relocate virtual machines. Both the management system 17 and the hosts 14-16 are provided so as to communicate with the WAN over the firewall 18, i.e., they are located within the demilitarized zone of the data center 13.

When the data center 13 receives a request for execution of a virtual machine but does not have available sufficient free resources to execute the virtual machine, the data center 13 may contact the marketplace server 11 in order to determine whether another data center connected to the WAN 12 has the resource availability required to execute the virtual machine. For illustration, the data center 13 may contact the marketplace server 11 in order to determine whether another data center connected to the WAN 12 can provide a given processing capacity and/or storage capacity throughout a given time span. Based on this information, another data center may be selected to which the virtual machine may be relocated.

When a larger number of data centers or other computing resources is connected to the WAN 12, several of them may have the resources and availability required to execute a virtual machine. In this case, the marketplace server 11 may be operative as a trading platform that allows under-utilized servers to be outsourced and missing server resources to be insourced. Thereby, the marketplace server 11 allows providers of server capacities to increase data center resource utilization, and provides users with enhanced flexibility as regards the insourcing of server resources. Prizes for selling and buying server resources may be adjusted at the marketplace server 11 according to supply and demand.

In addition to availability and prize, the data center 13 may select another data center on which a virtual machine is executed according to criteria that may be pre-set by a user. These criteria may include a quality of service required by a user or a required security standard. For example, sellers of server resources may agree to provide a given service level, and a user may agree to a relocation of a virtual machine only when a given service level is met. For further illustration, sellers and buyers of server resources can set up trusted domains to ensure higher security standards. Trusted domains may be formed by groups of data centers that agree on a given security level. A user may agree to a virtual machine being relocated only within a trusted domain. In the case of peak demands, virtual machines could be quickly moved within a trusted domain.

Fig. 3 is a flow diagram representation of a method according to an embodiment. The method, which is generally indicated at 20, may be implemented with the network 10 of Fig. 2.

At 21, a request to execute a virtual machine is received. The request may be received at a data center, such as the data center 13 of the network 10. The request may be transmitted to the data center from a user's computer through the WAN 12.

At 22, it is determined whether sufficient resources for execution of the virtual machine are available locally, i.e., at the data center 13 at which the request is received. If it is determined that sufficient resources for execution of the virtual machine are available at the data center 13 at which the request is received, the method proceeds to 23. At 23, the virtual machine is executed by a server installed in the data center 13. Otherwise, the method proceeds to 24.

At 24, it is determined whether the user permits the virtual machine to be executed externally, i.e., at a computing resource remote from the data center 13. The determining at 24 may be performed based on pre-set user preferences, for example based on an agreement between the data center 13 and the user for providing services which has been agreed on by both parties. If it is determined that the user does not permit the virtual machine to be executed externally by another data center, the method proceeds to 25. At 25, a fail signal is transmitted to the user to indicate that the virtual machine cannot be executed by the data center. Alternatively, if another application or several other applications that are being executed at the data center 13 can be relocated to other data centers because their owners agree to such a relocation, the other application(s) can be relocated to other data centers, so as to provide sufficient resources for execution of the virtual machine at the data center 13.

If it is determined that the user permits the virtual machine to be executed externally, i.e., by another data center, the method proceeds to 26. At 26, the data center 13 contacts the marketplace server 11. The marketplace server 11 collects information on the availability and status of resources at other data centers and provides this information to the data center 13.

At 27, one of the other data centers is selected for execution of the virtual machine based on the availability and status information provided by the marketplace server. The selection of the other data center may in addition be based on criteria pre-set by the user, which may include a required quality of service level or a security setting. Information on the quality of service provided by the other data centers may also be retrieved from the marketplace server. To meet the user's requirements as regards security, data centers may form trusted domains in which the data centers mutually agree on a given security standard. Depending on the user's requirements as regards security, the other data center for execution of the virtual machine may be selected from the data centers included in a trusted domain having a security level that meets the user's security requirements.

The data center on which the virtual machine is to be executed may also be selected by matching network parameter requirements associated with the virtual machine with network parameters measured for data traffic between the local data center 13 and other data centers that are available for remote execution of the virtual machine. To this end, network parameters may be measured for data traffic between the local data center and a plurality of remote data centers. The network parameters may respectively include, for example, a data transmission rate and/or a latency. When the virtual machine requires a given minimum data transmission rate and a given maximum latency for data traffic between the local and remote data center, the remote data center on which the virtual machine is executed may be selected such that the data transmission rate, latency etc. for data transmission between the local and remote data center meets, or best matches, the requirements associated with the virtual machine.

When a plurality of virtual machines is to be executed remotely, the remote data center on which a virtual machine of the plurality of virtual machines is executed may be selected in dependence on the network parameter requirements associated with each one of the plurality of virtual machines and the network parameters, such as data transmission rates and latencies, measured for data transmission between the local computing resource and a plurality of external computing resources.

As will be explained in more detail with reference to Figs. 4-8 below, one or several of the physical hosts installed in a data center may be configured such that a virtual machine can be executed externally, i.e., at a computing resource connected to the data center through a WAN, while requiring little or no adaption of the management applications that monitor virtual machine execution in the data center.

Fig. 4 is a schematic block diagram representation of components of a computing resource 30, such as a data center. The data center 30 of Fig. 4 may be utilized to implement any one of the computing resources 4-6 in the network 1 of Fig. 1 or the data center 13 in the network 10 of Fig. 2.

The data center 30 comprises a plurality of computing systems implemented as servers 31-35, i.e., physical hosts. The servers 31-35 are coupled to a firewall 39 and a router 40 to receive data from and transmit data to other computing resources coupled to a WAN (not shown in Fig. 4). The data center 30 also comprises a storage device 38 coupled to the servers 31-35. The storage device 38 stores data associated with virtual machines. The data associated with a virtual machine includes one or several disk images. Each one of the servers 31-35 may be configured to execute virtual machines.

The execution of the virtual machines may be monitored by a virtual machine monitoring system 36, 37. Each one of the virtual machine monitoring systems 36, 37 may be a known virtual machine monitor or hypervisor. While the virtual machine monitoring systems 36, 37 are schematically shown as separate blocks in the block diagram of Fig. 4, the virtual machine monitoring systems may also be integrated into the physical hosts 31-35.

The server 31 is configured such that it allows a virtual machine to be executed externally, i.e., by a computing resource connected to the data center 30 via a WAN. As will be explained in more detail next, in an embodiment, the server 31 may be configured to emulate a host that may initiate the external execution of the virtual machine, while interfacing with the virtual machine monitoring system(s) of the data center in essentially the same manner as if the virtual machine were executed locally. This allows the execution of the virtual machine to be monitored at the data center 30, even if the virtual machine is executed externally.

The server 31 has a processor 45 to emulate this host, one or several first interfaces 42, 43 to interface the host with the virtual machine monitoring system(s) 36, 37 of the data center 30, and a second interface 44 to allow the host to send and receive data via the firewall 39 through a WAN. It will be appreciated that the first interfaces 42, 43 may, but do not need to be interfaces of a physical host. For illustration, if the virtual machine monitoring system 36 or 37 is executed by the server 31, the associated interface 42 or 43 may be a software interface that does not need to correspond to a physical interface that allows the server 31 to communicate with external components. While the server 31 is schematically illustrated to interface with two virtual machine monitoring systems 36, 37 in Fig. 4, it is to be understood that in other embodiments the server 31 and the host emulated by the server 31 may be interfaced with only one virtual machine monitor, which can be selected from the various known virtual machine monitors or hypervisors.

In an embodiment, the server 31 may be configured such that it performs a disk image management that allows virtual machine execution to be started quickly. A virtual machine may be associated with one or several disk image files. A disk image may include a data portion, which is not modified during execution of the virtual machine or which is not frequently modified during execution of the virtual machine. As will be explained in more detail below, this data portion may be transmitted to another computing resource before a request for execution of a virtual machine is received, and will therefore be also referred to as "base image". The base image may be stored in the storage device 38. The server 31 may initiate transmission of the base image to one or plural second computing resources connected to the data center 30 via the WAN before a request for execution of the virtual machine is received. When the request for execution of the virtual machine is received, only a portion of the current disk image that has not yet been transmitted to the external computing resource needs to be transmitted to the external computing resource for execution of the virtual machine.

In an embodiment, the server 31 may be configured such that it performs a dynamical traffic shaping to provide optimum bandwidth for each virtual machine that is executed externally. To this end, the server 31 may monitor network parameters, such as data transmission rates or latencies, for data transmission to or from one or several external computing resources, and may configure parameters of local network interfaces, e.g., of interfaces between the server 31 and the virtual machine monitors 36, 37 or between the server 31 and the storage device 38, based on the monitored data transmission rates, latencies or other network parameters. The server 31 may further provide information on the data transmission rates or other network parameters to other applications, such as the virtual machine monitoring systems 36, 37, in the data center 30. Thereby, an information management is performed in which the other applications may be notified of delays associated with the external execution of virtual machines.

In an embodiment, the server 31 receives status information regarding the execution of the virtual machine by the external computing resource from the external computing resource. When a virtual machine monitor or hypervisor requests information on the status of the virtual machine, the server 31 responds to the request by providing data generated based on the previously received status information to the virtual machine monitor.

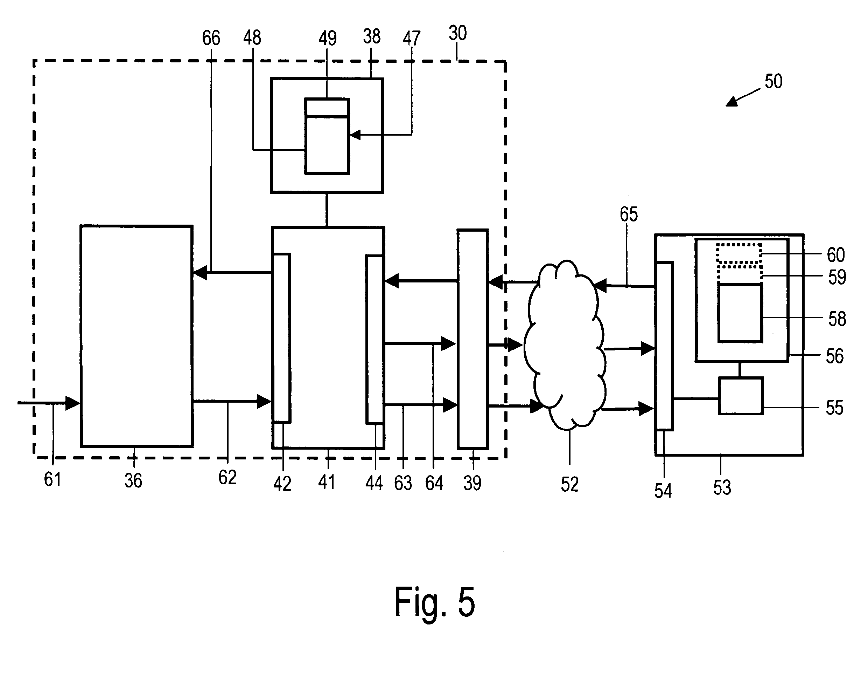

The operation of the server 31 will be explained in more detail with reference to Figs. 5-8.

Fig. 5 is a schematic block diagram representation illustrating data and signal flows in a network when the server 31 of the data center 30 determines that a virtual machine is to be executed externally. In the block diagram of Fig. 5, various physical components of the data center 30 are illustrated, which include a host 41 emulated by the server 31, the virtual machine monitor 36 coupled to the host 41 via the first interface 42, the storage device 38 storing a disk image 47 associated with the virtual machine and the firewall 39 coupled to the second interface 44 of the host 41.

The computing resource 30 and another computing resource 53 are coupled to a WAN 52. The data center 30 and the other computing resource 53 may communicate with each other via the WAN 52. In an embodiment, the other computing resource 53 may be a data center, a server or similar. In an embodiment, the WAN 52 may be the world wide web.

The computing resource 53 includes a network interface 54, a processor 55 coupled to the network interface 54 to receive and transmit data through the network interface 54, and a storage device 56 coupled to the processor 55 to store data.

The data center 30 may be the computing resource which normally executes a virtual machine upon receiving a user's request. The virtual machine is associated with the disk image 47 stored in the storage device 38. The disk image 47 includes a data portion 48 which is not, or not frequently, modified, and another data portion 49 which may be modified upon execution of the virtual machine. In order to allow the virtual machine to be rapidly relocated when peak demands occur at the data center 30, the host 41 copies the data portion 48 to the other computing resource 53, where it is stored as data 58. Therefore, the data portion 48, 58 is also referred to as a "base image" of the disk image which is deployed from the home computing resource 30 to another computing resource 53.

When the data center 30 receives a user's request 61 to execute the virtual machine, the virtual machine monitor 36 may transmit a request 62 to the host 41 in order to request the host 41 to execute the virtual machine. When sufficient resources are available, the virtual machine may be executed at the data center 30. If it is determined that the free resources at the data center 30 are not sufficient to allow the virtual machine to be executed locally, i.e., at the data center 30, the host 41 outputs a command 63 that is transmitted to the external computing resource 53 through the WAN 52 to initiate execution of the virtual machine by the external computing resource 53. When it is determined that the virtual machine is to be executed externally, the host 41 retrieves the data portion 49 of the disk image not included in the base image 48, 58 and transmits the data portion as data 64 through the WAN to the external computing resource 53, where the data portion is stored as data 59 in the storage device 56.

It will be appreciated that the data portion 49 of the disk image may be modified after the base image 48, 58 has been deployed to the external computing resource 53. This may occur, for example, when the virtual machine is executed at the computing resource 30 after the base image 48, 58 has been copied to the external computing resource 53. By transmitting the data portion 49 to the external computing resource 53 when the virtual machine is to be executed, the external computing resource 53 may be provided with a current disk image for the respective virtual machine.

The transmitted data portion 59 stored at the external computing resource 53 may be combined with the base image 58 already stored at the external computing resource 53. The base image 58 and the data portion 59 can be combined using copy-on-write techniques. In copy on write techniques, modifications to a file are not stored in the file itself, but in a separate file, also referred to as redo log. The redo log may include information on which sector locations in the original disk were written and contains the corresponding modified content of these sectors. The redo log therefore represents a "delta" between the original and current disk image file. The information in the redo log may be merged with the base image by modifying data in the base image based on the information included in the redo log and/or by adding data to the base image based on the information included in the redo log. Rather than merging the redo log with the base image, the base image and redo log may also be logically combined, without merging the files, and the combination may be used as a current disk image.

In an embodiment, the external computing resource 53 may start to execute the virtual machine when the data portion 49 of the disk image has been completely transmitted to the external computing resource 53. In another embodiment, the external computing resource 53 may start to execute the virtual machine before the data portion 49 of the disk image has been completely transmitted to the external computing resource 53. In this case, data in the data portion 49 may be retrieved from the data center 30 through the WAN 52 when required during the execution of the virtual machine by the external computing resource 53. When the data portion 49 has been completely copied to the external computing resource, the external computing resource 53 does no longer need to remotely access data stored in the data center 30 for executing the virtual machine.

During execution of the virtual machine, the external computing resource 53 transmits status information 65 through the WAN 52 to the data center 30. In an embodiment, the computing resource 53 may transmit the status information using a push-mechanism when a status change occurs during the execution of the virtual machine.

Based on the status information 65, the host 41 generates status data indicative of the current status of the virtual machine. The host 41 generates the status data based on the status information 65 previously received from the external computing resource 53. In an embodiment, the host 41 generates the status data at the same rate and in the same format as if the virtual machine were executed locally by the host 41. When the virtual machine monitor 36 requests information on the virtual machine status from the host 41, the host 41 provides the status data generated based on the status information 65. In this manner, the host 41 can respond to requests from the virtual machine monitor 36 in the same way as if the virtual machine were executed by the host 41 itself, rather than the external computing resource 53. I.e., the host 41 can "simulate" the local execution of the virtual machine as regards messages transmitted to and from a virtual machine monitor, so that no dedicated adaption of the virtual machine monitor 36 is required to accommodate the external execution of virtual machines.

During execution of the virtual machine, the external computing resource 53 may employ copy-on-write techniques to monitor changes to the disk image. For example, the computing resource may write a redo log 60 in which the modified sectors of the disk image and the modifications are stored. When the execution of the virtual machine by the external computing resource 53 is completed, the redo log 60 may be transmitted to the data center 30, so as to allow the data center 30 to update the disk image 47 stored in the storage device 38 to the current disk image, which includes modifications made during execution of the virtual machine by the external computing resource. In another embodiment, the external computing resource may directly modify the disk image 58, 59 and may copy the modified disk image to the data center 30 after the execution of the virtual machine has been completed.

While, for purposes of illustration, methods and devices according to embodiments of the invention have been explained with reference to Figs. 4 and 5 for a case in which one server in a data center is configured to initiate the external execution of a virtual machine while simulating a local execution of the virtual machine, it will be appreciated that in other embodiments more than one server in a data center may be configured such that it may deploy virtual machines to external computing resources. It will also be appreciated that in other embodiments one or several servers of a data center may be configured to deploy several virtual machines to one external computing resource or several external computing resources.

When several virtual machines are deployed, the host 41 may monitor a data traffic for the various virtual machines, which is transmitted between the host 41 and one or several external computing resources. Information on data transmission rates, latencies or other network parameters may be provided to other applications in the data center 30, such as the virtual machine monitor 36, to allow these applications to account for delays due to bandwidth limitations when virtual machine(s) are executed externally. The host 41 may also be configured to adjust local network interface settings based on the monitored data transmission rates, latencies or other network parameters and to perform a dynamical traffic shaping, in which priorities of data transmitted via a local network interface of the data center are adjusted based on the requirements for the respective virtual machines. For illustration, if a virtual machine is executed by an external computing resource, such as computing resource 53, data to be transmitted to the external resource may be given a high priority when the external resource intends to remotely access data at the data center 30 in order to allow the virtual machine to be executed before the full disk image has been transmitted to the external computing resource.

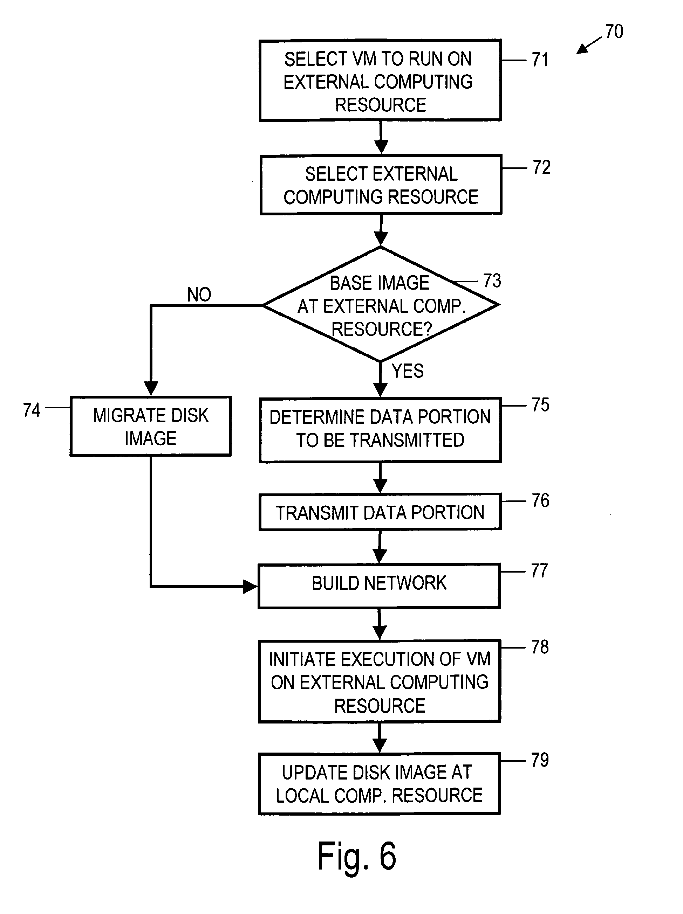

Fig. 6 is a flow diagram representation of a method 70 of executing a virtual machine. The method may be performed in a data center, such as the computing resource 4 in the network 1 of Fig. 1, the data center 13 in the network 10 of Fig. 2, or the data center 30 of Figs. 4 and 5. For further illustration of the method, reference will be made to the data center 30 of Figs. 4 and 5 in the following description of the method 70.

At 71, a virtual machine (VM) or several virtual machines are selected which are to be executed by an external computing resource. The selecting at 71 can be performed by an operator of the data center who may manually select which virtual machine(s) are to be executed at an external computing resource. Based on the selection, a computing system of the data center, e.g., the server 31 in the data center 30, may determine whether a given virtual machine is to be executed externally when the data center 30 receives a request to execute the respective virtual machine.

At 72, an external computing resource may be selected for the execution of the virtual machine. As has been explained with reference to Figs. 2 and 3 above, the external computing resource may be selected based on availability and status information collected by a marketplace server. The external computing resource may further be selected based on criteria pre-set by a user, which may include quality of service requirements and security requirements.

At 73, it is determined whether a base image of the disk image associated with the virtual machine has already been copied to the selected external computing resource. The determining at 73 may be performed by the computing system 31 of the data center 30. If it is determined that the base image of the disk image is not yet stored at the external computing resource, the method proceeds to 74. At 74, the disk image is migrated to the external computing resource, and the method then proceeds to 77.

If it is determined that the base image of the disk image is stored at the external computing resource, the method proceeds to 75. At 75, a data portion of the disk image is determined, which is to be transmitted to the external computing resource in order to provide the external computing resource with the current disk image. In an embodiment, the data portion may be a portion of the disk image that is frequently modified. In an embodiment, the data portion may be a redo log that indicates modifications made to the disk image after the base image has been copied to the external computing resource. In an embodiment, the data portion has a size that is small compared to the size of the base image. In an embodiment, the computing system 31 of the data center 30 may determine the data portion that still is to be copied to the external computing resource.

At 76, the data portion is transmitted to the external computing resource. The data portion may be merged with the base image at the external computing resource, or the base image and the data portion may be kept as separate files. In the latter case, the logical combination of the base image and the data portion provides a current disk image.

At 77, a network is built to allow data communication to be established between the local data center and the external computing resource while the virtual machine is being executed. At 78, the execution of the virtual machine on the external resource is initiated.

At 79, when the execution of the virtual machine by the external computing resource has been completed, the disk image file associated with the virtual machine is updated at the local computing resource, e.g., the data center 30. In an embodiment, the external computing resource may copy the current disk image file back to the local computing resource.

In another embodiment, the external computing resource may copy portions of the disk image modified by the external computing resource during execution of the virtual machine. In an embodiment, the disk image file at the local data resource may include the base image and a redo log, e.g., the base image 48 and redo log 49 schematically illustrated in Fig. 5, and the redo log may be transmitted to the external computing resource when a request for execution of the virtual machine is received at the local computing resource. When the external computing resource modifies data in the disk image or adds data to the disk image, the external computing resource does not modify the base image file, but writes into the redo log transmitted from the local computing resource. Alternatively, the external computing resource may generate a second redo log, to generate a chain of redo logs or "deltas" between the base image and the current disk image. The modified redo log, or the second redo log, can be transmitted back to the local computing resource when the execution of the virtual machine has been completed.

While, in the method 70, execution of the virtual machine is initiated after the data portion has been transmitted to the external computing resource, in a method according to another embodiment, the execution of the virtual machine by the external computing resource can be initiated before the full image has been migrated. In this case, the external computing resource may remotely access data stored at the local computing resource, e.g., the data center 30, when required upon execution of the virtual machine before the full disk image has been migrated.

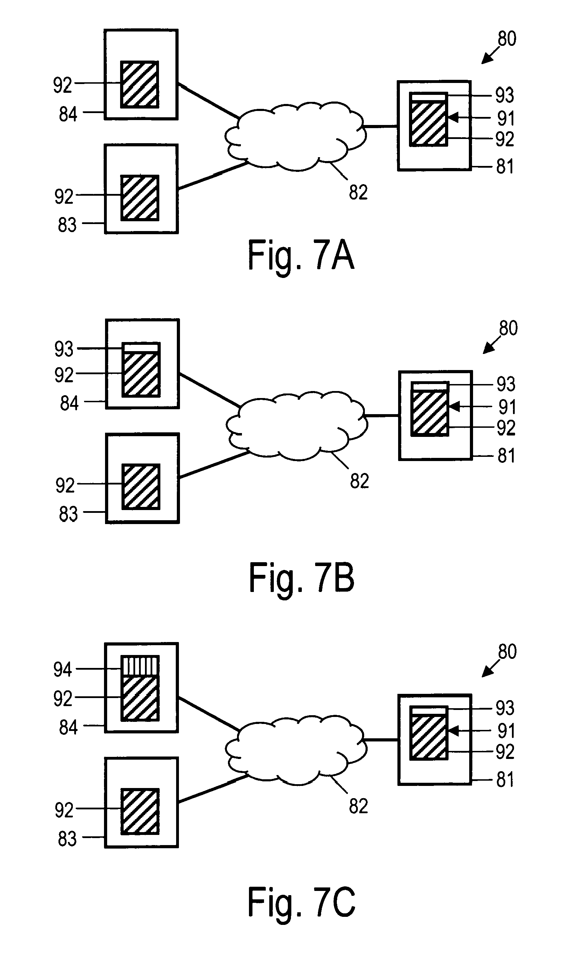

The disk image management according to an embodiment of the invention is schematically illustrated in Fig. 7. Fig. 7 shows a network 80 having a plurality of computing resource 81, 83 and 84 connected through a WAN 82. Computing resource 81 is a computing resource at which a virtual machine is normally executed. Computing resources 83 and 84 are computing resources that outsource server resources to the computing resource 81. The disk image management schematically illustrated in Fig. 7 can be performed using the data center 30 of Figs. 4 and 5 as the computing resource 81. The disk image management schematically illustrated in Fig. 7 can also be used in the method 70 of Fig. 6.

The computing resource 81 stores a disk image 91 associated with a virtual machine. The disk image 91 includes a portion 92 and a portion 93. In an embodiment, the portion 92 of the disk image 91 is not modified, i.e., it represents a read-only portion of the disk image 91. The portion 93 may be modified, for example, when the computing resource 81 executes the virtual machine. I.e., the portion 93 may represent a read-and-write portion of the disk image.

In an embodiment, the portion 92 may be the disk image file at a given time, and modifications to the disk image made after this time are not written into the disk image file itself, but rather into a redo log, using copy-on-write techniques. Then, the portion 93 may be the redo log into which modifications to the disk image are stored.

Fig. 7A illustrates the network 80 in a state before the computing resource 81 requests one of the other computing resources 83, 84 to execute the virtual machine. The portion 92 of the disk image has been copied to and is stored at the other computing resources 83, 84. However, in the state illustrated in Fig. 7A, the other computing resources 83, 84 do not have stored the full current disk image, for the portion 93 of the disk image is stored at the computing resource 81, but has not yet been transmitted to one of the other computing resources 83, 84.

Fig. 7B illustrates the network 80 when the computing resource 81 requests the other computing resource 84 to execute the virtual machine. Then, the portion 93 of the disk image is copied from the computing resource 81 to the other computing resource 84, to provide the other computing resource with the current disk image.

Fig. 7C illustrates the network 80 when the other computing resource 84 executes the virtual machine. In an embodiment, the other computing resource 84 may modify the portion 93 of the disk image during execution, for example by writing data thereinto, by modifying data therein, or by deleting data therefrom. The modified portion is indicated at 94.

When execution of the virtual machine by the other computing resource 84 is completed, the modified portion 94 may be copied back to the computing resource 81 to allow the computing resource 81 to update the disk image.

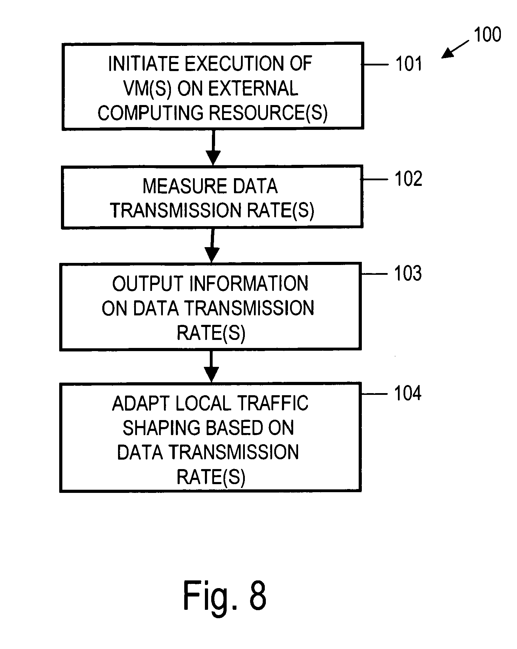

Fig. 8 is a flow diagram representation of a procedure 100 that may be utilized while an external computing resource executes a virtual machine. The procedure 100 may be performed in a data center, such as the computing resource 4 in the network 1 of Fig. 1, the data center 13 in the network 10 of Fig. 2, or the data center 30 of Figs. 4 and 5. The procedure 100 may in particular be performed by a computing system of a data center, such as the server 31 or the host 41 emulated by the server 31 in the data center 30. The procedure 100 allows the server 31 to perform information management to account for the limited bandwidth when transmitting data between a local computing resource and an external computing resource.

At 101, execution of one virtual machine by an external computing resource or of several virtual machines by one or several external computing resources is initiated.

At 102, network parameters, such as a data transmission rate between the local computing resource and each one of the external computing resources at which a virtual machine is executed are determined. When one external computing resource executes plural virtual machines, the number of virtual machines executed by the external computing resource is taken into account, because these virtual machines share the available bandwidth.

At 103, information on the data transmission rates is output. In an embodiment, the information on the data transmission rates may be provided by the server 31 of the data center 30 to other applications executed at the data center 30, such as the virtual machine monitor 36. Based on the information on the data transmission rates, the other applications executed at the data center 30 may take into account delays that may occur when a virtual machine is executed externally.

In an embodiment, the server 31 may use the information on the data transmission rates to determine fictitious data rates across interfaces that connect the server 31 or host 41 with other applications and systems in the data center 30, to account for delays incurred by the external execution of the virtual machine. Information on the data transmission rates can be output by adjusting data rate settings for the local interfaces to the fictitious data rates. In an embodiment, parameters of a local network interface in the computing center, for example between the server 31 and the data storage device 38 or between the server 31 and the virtual machine monitor 36, may be adjusted to make the delay associated with external execution of the virtual machine visible to other applications and systems.

At 104, a local traffic shaping may be adapted based on the determined data transmission rates. To adapt the local traffic shaping, priorities for data associated with different virtual machines may be adjusted. For illustration, data packets that are required by an external computing resource to allow the external computing resource to proceed with the execution of the virtual machine may be assigned a high priority, in order to ensure that the execution of the virtual machine by the external computing resource is not interrupted.

While the steps of measuring data rates at 102, outputting information at 103 and adapting a local traffic shaping at 104 are illustrated in Fig. 8 as discrete steps, these steps may be performed simultaneously. These steps can also be performed repeatedly, so as to provide for a continuous information management and traffic shaping.

While a monitoring of data transmission rates and a traffic shaping based on monitored data transmission rates has been described with reference to Fig. 8, in other embodiments one or several network parameters may be monitored, and traffic shaping may be performed based on the monitored network parameter(s). In an embodiment, both a data transmission rate and a latency may be monitored. In an embodiment, fluctuations in data transmission rates and/or latencies may additionally be monitored.

In conclusion, methods of executing a virtual machine and computing systems configured to initiate execution of a virtual machine at an external computing resource according to various embodiments have been described. The computing system may be configured as a server having one or several general purpose processors. The invention may be embodied by a computer-executable instruction code, which may be stored on a data storage device, which directs the general purpose processor of the server to perform the functions of determining if a virtual machine is to be executed at an external computing resource, to determine if a base image of data associated with the virtual machine is stored at the external computing resource, to initiate execution of the virtual machine at the external computing resource and to provide information on the execution to a virtual machine monitoring system. Therefore, embodiments of the invention may also be implemented in a computer-executable instruction code which directs a server to perform the indicated functions.

Various modifications of the methods and systems described herein may be implemented in other embodiments. For example, while in some embodiments one server acts as computing system configured to deploy a virtual machine to an external computing resource and to provide information on the execution to a virtual machine monitoring system, in other embodiments the computing system may be implemented by a network of servers or any other suitable computing device. Further, while some embodiments have been described in the context of a trading platform that allows server resources to be outsourced and insourced, the embodiments may also be implemented in use cases in which there is no trading platform for selling and buying server resources. For illustration, embodiments of the invention may be used when there is a mutual agreement between data centers to provide server resources to one another when peak demands occur.

While embodiments of the present invention may be utilized in data centers coupled to a WAN to outsource or insource server resources from or into the data center, the present invention is not limited to this specific field of application. For illustration, embodiments of the invention may also be used when a single server coupled to a WAN deploys a virtual machine to another computing resource coupled to the WAN.

## Claims

1. Method of executing a virtual machine, comprising:
receiving a request for execution of a virtual machine at a first computing resource (4; 13; 30; 81), wherein said first computing resource (4; 13; 30; 81) comprises a storage device (38) which stores data (47) associated with said virtual machine, a computing system (31; 41) configured to execute said virtual machine and a virtual machine monitoring system (36, 37) coupled to said computing system (31; 41) to monitor execution of said virtual machine;
requesting, by said virtual machine monitoring system (36, 37), said computing system (31; 41) to execute said virtual machine;
determining, by said computing system (31; 41), whether said virtual machine is to be executed by a second computing resource (5, 6; 53; 84) connected to said first computing resource (4; 13; 30; 81) through a wide area network (WAN) (2; 12; 52; 82);
wherein, if it is determined that said virtual machine is to be executed by said second computing resource (5, 6; 53; 84), said computing system (31; 41) determines whether a base image (58; 92) of said data associated with said virtual machine is stored at said second computing resource (5, 6; 53; 84), initiates execution of said virtual machine at said second computing resource (5, 6; 53; 84) and provides information on a progress of said execution to said virtual machine monitoring system (36, 37) while said virtual machine is executed.

2. The method of claim 1,
wherein, if it is determined that said virtual machine is to be executed by said second computing resource (5, 6; 53; 84), said computing system (31; 41) initiates transmission of a data portion (49) of said data (47) associated with said virtual machine, which is not included in said base image (58; 92), from said first computing resource (4; 13; 30; 81) through said WAN to said second computing resource (5, 6; 53; 84).

3. The method of claim 2,
wherein said data portion (59; 93) and said base image (58; 92) are combined at said second computing resource (5, 6; 53; 84; 84), in particular using copy-on-write techniques.

4. The method of claim 2 or 3,
wherein said second computing resource (5, 6; 53; 84) starts said execution of said virtual machine before transmission of said data portion (49, 59; 93) is completed and remotely accesses data (47; 93) stored at said first computing resource (4; 13; 30; 81) when required during said execution of said virtual machine.

5. The method of any one of the preceding claims, comprising:
transmitting said base image (48, 58; 92) to a plurality of computing resources (83, 84) connected to said first computing resource (4; 13; 30; 81) through said WAN (2; 12; 52; 82) before receiving said request.

6. The method of claim 5,
wherein said computing system (31; 41) selects said second computing resource (5, 6; 53; 84) from said plurality of computing resources according to criteria set by a user and/or based on an availability information for said plurality of computing resources.

7. The method of any one of the preceding claims,
wherein said computing system (31; 41) monitors a network parameter for data transmission between said first computing resource (4; 13; 30; 81) and said second computing resource (5, 6; 53; 84),
wherein said computing system (31; 41) dynamically shapes a data traffic based on said monitored network parameter and/or provides information on said monitored network parameter to applications executed at said first computing resource (4; 13; 30; 81).

8. The method of claim 7,
wherein said computing system (31; 41) initiates execution of at least one further virtual machine by at least one further second computing resource (6), monitors at least one further network parameter for data transmission between said first computing resource (4; 13; 30; 81) and said at least one further second computing resource (6) and dynamically shapes a data traffic based on said monitored network parameter and said monitored at least one further network parameter.

9. The method of any one of the preceding claims,
wherein said computing system (31; 41) simulates a local execution of said virtual machine to provide said information on said execution of said virtual machine to said virtual machine monitoring system (36, 37).

10. The method of any one of the preceding claims, comprising:
after said execution of said virtual machine by said second computing resource (5, 6; 53; 84) is completed, copying a portion of data (59, 60; 94) associated with said virtual machine, which is stored at said second computing resource (5, 6; 53; 84) and is modified during said execution of said virtual machine, to said first computing resource (4; 13; 30; 81).

11. A computing system, comprising a processor (45), a first interface (42, 43) coupled to said processor, and a second interface (44) coupled to said processor, the second interface (44) being configured to output data to a Wide Area Network (WAN) (2; 12; 52; 82),
wherein said computing system (31) is configured such that, when a request for execution of a virtual machine is received at said first interface (42, 43), said processor (45) determines whether said virtual machine is to be executed by a second computing resource (5, 6; 53; 84) connected to said computing system (31) through said WAN (2; 12; 52; 82),
wherein, if said processor (45) determines that said virtual machine is to be executed by said second computing resource (5, 6; 53; 84), said processor (45) determines whether a base image (58; 92) of data associated with said virtual machine is stored at said second computing resource (5, 6; 53; 84), outputs via said second interface (44) a signal to initiate execution of said virtual machine at said second computing resource (5, 6; 53; 84) and provides information on a progress of said execution via said first interface (42, 43).

12. The computing system of claim 11,
wherein said computing system (31) is configured to act as the computing system (31) in the method of any one of claims 1-10.

13. A computer-executable instruction code which, when executed by a processor of a computing system (31) having a first interface (42, 43) coupled to said processor and a second interface (44) coupled to said processor, the second interface (44) being configured to output data to a Wide Area Network (WAN) (2; 12; 52; 82), directs the computing system (31)
to determine, when a request for execution of a virtual machine is received at said first interface (42, 43), whether said virtual machine is to be executed by a second computing resource (5, 6; 53; 84) connected to said computing system (31) through said WAN (2; 12; 52; 82), and
if it is determined that said virtual machine is to be executed by said second computing resource (5, 6; 53; 84), to determine whether a base image (58; 92) of data (47) associated with said virtual machine is stored at said second computing resource (5, 6; 53; 84), to output via said second interface (44) a signal (63) to initiate execution of said virtual machine at said second computing resource (5, 6; 53; 84) and to provide information (66) on a progress of said execution via said first interface (42, 43).

14. The computer-executable instruction code of claim 13, comprising instructions which direct the computing system (31) to initiate transmission of said base image (58; 92) to a plurality of computing resources before receiving said request at said first interface (42, 43), and to select said second computing resource (5, 6; 53; 84) from said plurality of computing resources.

15. The computer-executable instruction code of claim 13 or 14, comprising instructions which direct the computing system (31) to act as the computing system (31) in the method of any one of claims 1-11.
